# EUROPEAN PATENT SPECIFICATION

(11) **EP 2 214 504 B1**
(45) Date of publication and mention of the grant of the patent: **05.03.2014**
(21) Application number: 08853690.9
(22) Date of filing: 26.11.2008
(51) Int. Cl.: A23G 4/08, C08F 279/02, C08F 265/02, C08F 267/04, C08F 291/00, C08L 51/00, C08L 51/04, C08F 255/00

(54) **AMPHIPHILIC POLYMERIC MATERIAL**
AMPHIPHILES POLYMERES MATERIAL
MATÉRIAU POLYMÈRE AMPHIPHILE

(30) Priority: 26.11.2007 EP 07121564; 26.02.2008 WO PCT/EP2008/052325; 26.02.2008 WO PCT/EP2008/052326; 05.06.2008 EP 08157684; 05.06.2008 EP 08157683; 15.10.2008 WO PCT/EP2008/063879
(43) Date of publication of application: 11.08.2010
(73) Proprietor: Revolymer Limited, London EC2Y 5AB (GB)
(72) Inventor: PEARS, David Alan, Flintshire CH8 9HE (GB); SIVANAND, Pennadam Shanmugam, Flintshire CH8 9HE (GB); CASTLE, Thomas Charles, Flintshire CH8 9HE (GB)
(74) Representative: Clyde-Watson, Zöe
(86) International application number: PCT/EP2008/066256
(87) International publication number: WO 2009/068569

(56) References cited:
- EP-A- 0 284 428
- WO-A-01/00731
- WO-A-2006/016179
- WO-A-2008/104546
- US-A- 5 364 907
- US-A1- 2008 233 233

## Description

The present invention relates to a graft polymeric material and methods for producing the same.

Chewing Gum is a consumer good that is regularly enjoyed by millions of people worldwide. We have disclosed, in our previous Patent application published as WO2006/016179 that the addition of an amphiphilic graft copolymer to chewing gum formulations can result in them having reduced stickiness, combating the problems associated with pollution resulting from carelessly discarded gum cuds. In that Patent application, the graft copolymer is formed by reacting polyisoprene-graft-maleic anhydride (the backbone) with poly(alkyleneoxy) alcohol side chain precursors in an organic solvent such as toluene and typically in the presence of an activator, for instance, triethylamine at elevated temperature.

WO2008104546 discloses chewing gum compositions similar to WO2006016179 wherein the side chains may be based on polypeptide derivatives. US20080233233 discloses chewing gum compositions comprising terpolymers including methylvinyl other, maleic anhydride, maleic acid; and an elastomer.

As gum is a commodity product it is desirable to ensure that the synthesis of all of the ingredients is as efficient as possible to ensure that the cost of the resulting material is competitive. WO2006/016179 specifically discloses hydroxyl-terminated side chain precursors only, and we have now found that the use of side chain precursors terminated with amine groups results in more efficient production of polymeric material.

Graft polymeric materials formed by grafting backbones with amine terminated polymers are known. US2005/0054796, for instance, discloses the reaction of olefin-maleic anhydride copolymers with methoxy polyethylene glycol amines. The resultant polymeric materials are used as concrete additives.

US2005/0084466 discloses the reaction of JEFFAMINE^{®} M-1000 with polylsobutylene succinic anhydride. The resultant polymeric material is said to be useful in oil-in-water emulsions.

Jiang-Jen Lin et al in Polymer 41 (2000) 2405-2417 disclose the preparation and electrostatic dissipating properties of poly(oxyalkylene)imide grafted polypropylene copolymers. Jiang-Jen further goes in to describe, in Ind. Eng. Chem. Res. 2000, 39, 65-71, the synthesis, characterisation and interfacial behaviour of polystyrene-b-poly(ethylene/butylene)-b-polystyrene grafted with various poly(oxyalkylene)amines.

However, none of these references describe use of the graft polymeric materials in chewing gum bases and chewing gum compositions.

Accordingly, there is provided in a first aspect of the invention a chewing gum base comprising an amphiphilic polymeric material which comprises a straight or branched chain carbon-carbon backbone and a multiplicity of side chains attached to the backbone, wherein the side chains have the formula (I) 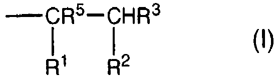
wherein R¹ and R² are each, independently, H, -C(O)WR⁴ or -C(O)Q; provided that at least one of R¹ and R² is the group -C(O)Q;
or R¹ and R² together form a cyclic structure together with the carbon atoms to which they are attached, of formula (II) 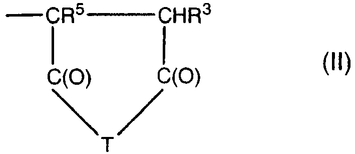
R³-R⁵ are each independently H or C₁₋₆ alkyl;
W is O or NR⁴;
Q is a group of formula- NR⁴-Y-X¹P;
T is a group of formula -N-Y-X¹P;
X¹ is O, S, (CH₂)ₙ, NR⁴ or is absent; wherein n is 1-6;
P is H; and
Y is a hydrophilic polymeric group that is a poly(alkylene oxide), polyglycidol, poly(vinyl alcohol), poly(styrene sulphonate) or poly(acrylic acid).

In a second aspect of the invention there is provided a chewing gum composition comprising the amphiphilic polymeric material as defined in the first aspect of the invention, and one or more sweetening or flavouring agents.

In a third aspect of the invention, there is provided an amphiphilic polymeric material as defined above in the first aspect of the invention, wherein the carbon-carbon backbone is derived from a homopolymer of polyisoprene, and in the formula (I) or (II) X¹ is (CH₂)ₙ or is absent; and P is H.

In a fourth aspect of the invention, there is provided a method for making the amphiphilic polymeric material of the third aspect of the invention, wherein backbone precursors comprising pendant units of general formula (III) 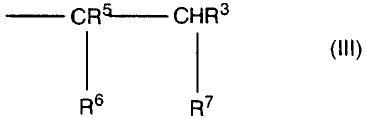 wherein R³ is H or C₁₋₆ alkyl, R⁵ is H or C₁₋₆ alkyl and R⁶ and R⁷ are H or an acylating group, provided at least one of R⁶ and R⁷ is an acylating group, or R⁶ and R⁷ are linked to form, together with the carbon atoms to which they are attached, a group of formula (IV): 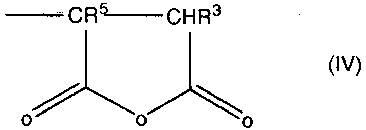 are reacted with side chain precursors of general formula (V) in a reaction mixture

HR⁴N-Y-X¹H (V)

wherein X¹ is selected from (CH₂)ₙ or is absent; wherein n is 1-6;
and R⁴ is H or C₁₋₆ alkyl; and
Y is a particular hydrophilic polymeric group as previously defined.
wherein in the method, the amine group HR⁴N in compound of formula (V) reacts with the units of general formula (III) or (IV) to give the amphiphilic polymeric material with side chains of general formula (I) 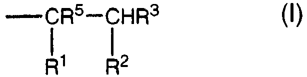 wherein R¹ and R² are each, independently, H, -C(O)WR⁴ or -C(O)Q;
provided that at least one of R¹ and R² is the group -C(O)Q;
or R¹ and R² together form a cyclic structure together with the carbon atoms to which they are attached, of formula (II) 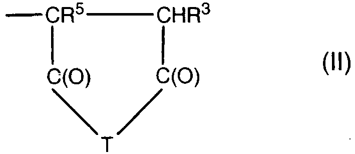 wherein
W is O or NR⁴;
Q is a group of formula -NR⁴-Y-X¹P;
T is a group of formula -N-Y-X¹P; and
P is H.

The invention outlined herein involves the strategy of minimising the use of the materials that were previously required to create the polymeric material. More specifically, this is achieved by using side chain precursors terminated with amine groups, which react more fully with acylating groups than their hydroxyl-equivalents. The resultant amphiphilic polymeric material retains all of the qualities associated with material made using side chain precursors terminated with hydroxyl groups - i.e. the material is of low tack and can be incorporated into chewing gum compositions to reduce their adhesive nature.

Amphiphilic polymeric material having a backbone derived from polyisoprene and side chains formed from monoamine side chain precursors is a particularly preferred material for use in the chewing gum bases and compositions of the invention. The use of monofunctional side chain precursors ensures that crosslinking does not occur, which reduces product complexity. This amphiphilic polymeric material accordingly forms the third aspect of the invention.

Methods for making compositions containing anhydride based graft copolymers are known. EP0945473, for instance, describes a solvent-free method which involves mixing an ethylenically-unsaturated monomer, an anhydride monomer, and either a monofunctional polyglycol having a hydroxyl or amine terminal group or a polyfunctional polyglycol, and a free radical initiator to form a mixture. The mixture is heated to form a mixture of graft copolymeric materials of the polyglycol and the ethylenically unsaturated monomer including the graft copolymer product, which may be useful as a soil release agent in detergent formulations.

The method used to make the compounds of the present invention differs from the disclosure in EP0945473, in that the method in the latter results in a multitude of different products, most of which comprise units derived from maleic anhydride actually in the backbone of the copolymer, rather than being present as a graft on the backbone. The method used in this invention avoids the problem of such product complexity by reacting a pre-formed polymeric backbone with side chain precursors. Furthermore, the present method does not proceed via a free-radical mechanism.

The backbone of the polymeric material in this invention is preferably derived from a homopolymer of an ethylenically unsaturated hydrocarbon monomer or from a copolymer of two or more ethylenically unsaturated hydrocarbon monomers. The backbone precursor is typically an elastomeric material. The amphiphilic polymeric material may also be an elastomeric material.

The backbone typically comprises a homopolymer of an ethylenically-unsaturated polymerisable hydrocarbon monomer or a copolymer of two or more ethylenically-unsaturated polymerisable hydrocarbon monomers. By the term "ethylenically-unsaturated polymerisable hydrocarbon monomer" we mean a polymerisable hydrocarbon containing at least one carbon-carbon double bond which is capable of undergoing addition (otherwise known as chain-growth or chain-reaction) polymerisation to form a straight or branched chain hydrocarbon polymer having a carbon-carbon polymer backbone. According to one preferred embodiment, the backbone comprises a homopolymer of an ethylenically-unsaturated polymerisable hydrocarbon monomer containing 4 or 5 carbon atoms, for example, isobutylene (2-methylpropene). The carbon-carbon polymer backbone may also, according to another embodiment, be derived from a homopolymer of a conjugated diene hydrocarbon monomer, especially one containing 4 or 5 carbon atoms, such as 1,3-butadiene or isoprene.

As mentioned above, the carbon-carbon polymer backbone may comprise a copolymer of two or more ethylenically-unsaturated polymerisable hydrocarbon monomers. Preferably, it comprises a copolymer of two such monomers. For example, it may comprise a hydrocarbon copolymer of a hydrocarbon monomer having one carbon-carbon double bond and a hydrocarbon monomer having two carbon-carbon double bonds. For example, the carbon-carbon polymer backbone may comprise a copolymer of isobutylene and isoprene. According to a different embodiment, the carbon-carbon polymer backbone is derived from a butadiene-styrene block copolymer. The backbone may comprise a random, alternating or block, e.g. A-B or AB-A block copolymer.

The backbone precursors used to form the backbone in the polymeric materials have pendant units which have acylating groups. The acylating groups may be, for instance, units derived from maleic anhydride. The backbone precursor typically has units derived from maleic anhydride grafted thereon. One suitable backbone precursor is polyisoprene grafted with maleic anhydride, PIP-g-MA. Such graft copolymers are commercially available as further detailed below, or can be synthesised (see Examples).

The backbone precursor used to form the backbone in the polymeric material typically has a molecular weight in the range 10,000 to 200,000, preferably 20,000 to 40,000, more preferably from 25,000 to 45,000. Unless otherwise specified, the unit of molecular weight used in this specification is g/mol.

The backbone is typically hydrophobic in nature. In contrast, the side chains are hydrophilic by virtue of the group Y, which confers several advantages. The hydrophobic/hydrophilic balance of the resultant amphiphilic polymeric material has a comb-like copolymer structure which gives the material its low-tack properties. The hydrophilic side chains confer surface active properties on the polymeric material.

The group Y in this invention is a poly(alkylene oxide) such as poly(ethylene oxide), polyglycidol, poly(vinyl alcohol), poly(styrene sulphonate) or poly(acrylic acid), most preferably poly(ethylene oxide). The side chain precursors used in the method of this invention are preferably polyether amines.

In one preferred embodiment of the invention, the group Y is a polyalkylene oxide of general formula (ZO)_{b} wherein Z is an alkylene group having from 2 to 4 carbon atoms and b is an integer in the range 1 to 125.

In a different embodiment, the polyalkylene oxide is a random, statistical, alternating or block copolymer (or a mixture of two of these) of two or more monomer units ZO, wherein each Z is, independently, an alkylene group having from 2 to 4 carbon atoms. The total number of monomer units is generally in the range 1 to 125.

In the side chains of formula (I), typically, W is O. Preferably, X¹ is O or NR⁴. R⁴ is preferably H or CH₃. n is preferably in the range 1-4. R² is preferably-C(O)WR⁴ or-C(O)Q.

Each backbone in the amphiphilic polymeric material may have a plurality of side chains which may include a mixture of the side chains listed above, and/or have different chain lengths/molecular weights. Preferably, however, each side chain has the same chain length/molecular weight.

In this invention, the side chain precursors are terminated with at least one amine group, and the side chains in the amphiphilic polymeric material are linked to the backbone via amide linkages.

In the side chains of formula (I) or (II), preferably, R⁵ is H. In a further preferred embodiment, R³ is H or CH₃.

According to one embodiment of the present invention, the side chains in the polymeric material have the formula 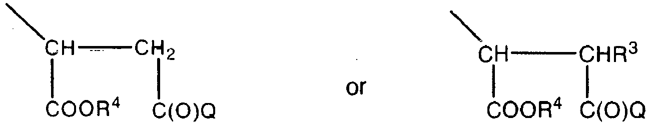 wherein R³, R⁴ and Q are as defined above. These groups are derived from maleic anhydride units or derivatives thereof grafted onto the backbone.

Preferably, the polymeric material has pendant carboxylic acid groups. In the above formula therefore, preferably R⁴ is H.

According to another embodiment, the side chains may have formula 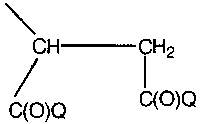 wherein Q is as defined above.

In another embodiment the side chains have the following formula 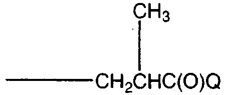 wherein Q is as defined above. These are derived from methacrylic-grafted materials.

According to another embodiment the side chains may have the formula

-CH₂CH₂C(O)Q

These are derived from acrylic grafted materials.

From the above it can be seen that the acylating groups in the backbone precursors eventually form part of the side chains in the amphiphilic polymeric material. Suitable acylating groups include carboxylic acids, carboxylic acid esters, acid amides, acyl chlorides and acid anhydrides.

In the method according to this invention, up to 2 equivalents of side chain precursors with respect to each acylating group can be reacted. Preferably, the acylating group is derived from a maleic anhydride unit. Suitable side chain precursors which are polyether amines are available commercially; a range of mono and difunctionalised amine polymers of ethylene oxide (EO) and propylene oxide (PO) are sold under the Jeffamine brand name by Huntsman. Reaction between the amine functionalized polymers with maleic anhydride derived units, for instance, can generate any of three different structures:

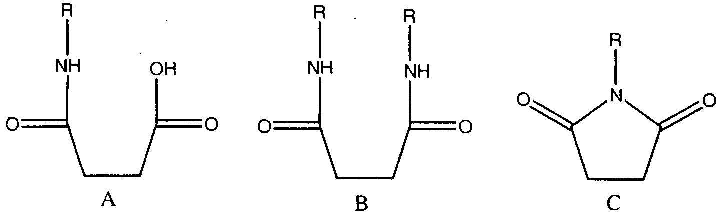

The structure marked C may be formed by an intramolecular reaction of A, accompanied by the elimination of H₂O, is more likely to occur with the assistance of catalysis (e.g by the addition of an acid). Both mono and difunctional amine polymers are used in the invention. Depending on the reaction conditions, the use of hydrophilic difunctional amine side chain precursors can lead to a cross-linked or chain extended amphiphilic polymeric material. Alternatively mono and difunctional side chain precursors may be combined to modify the properties of the resulting polymeric material to that required. The structure and properties of the polymers sold under the trade names Jeffamine M-1000 and M-2070 are particularly preferred. 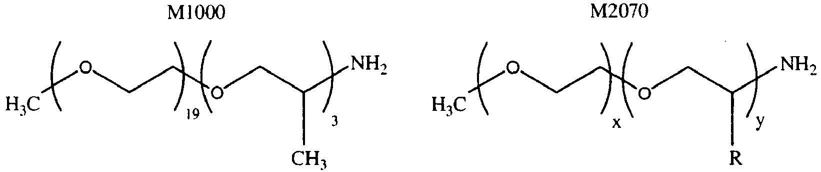 [x=6; y ≈ 35 where R is a mixture of H for (EO), or CH₃ for (PO) units]

Jeffamine M-1000 is a monoamine polyether with a EO:PO ratio of 19:3 and a molecular weight of approximately 1000, M-2070 is a monoamine polyether with an EO:PO ratio of 31:10 and a molecular weight of approximately 2000. Due to the relatively high ratios of ethylene oxide units in these polymers they are regarded as hydrophilic materials. Both M-1000 and M-2070 have been found to react efficiently with PIP-*g*MA.

It is possible to synthesise amphiphilic polymeric material through the reaction of backbone precursors with a monoester of maleic anhydride, for instance we have obtained good results with a PIP-g-MaMme (polyisoprene-graft-monoacid monomethyl ester supplied by Kuraray Co. Ltd, sold as LIR-410) with the general formula 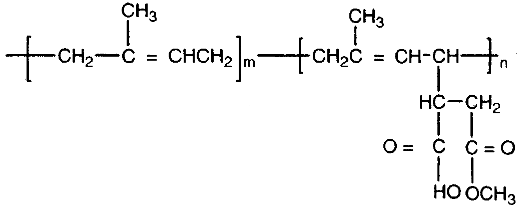 and has a functionality (i.e. n) of approximately 10, an average molecular weight of about 25,000, and a glass transition temperature of -59°C. Each monomethyl ester may react with a single amine functionality.

As stated above, the properties of the polymeric material depend not only on the character of the side chains grafted onto the carbon-carbon polymer backbone but also on the number of grafted side chains. In the invention a multiplicity of side chain precursors react with each backbone precursor. The term "multiplicity" is defined herein as meaning one or more grafted side chains. At least one side chain precursor reacts with each backbone precursor. In order to achieve a desired degree of hydrophilicity in the polymeric material, it is preferred that the ratio of side chains to backbone units in the resultant polymeric material is in the range 1:400 to 1:5, but more preferably 1:200 to 1:10. The side chains are typically statistically distributed along the carbon-carbon polymer backbone since the location of attachment of the side chain on the backbone will depend on the positions of suitable attachment locations in the backbone of the hydrocarbon polymer used in the manufacture.

When the side chains are linked to the polymer backbone via grafted maleic anhydride units, each maleic anhydride unit in the polymer backbone may be derivatised with either zero, one or two side chains.

In the method of this invention, side chain precursors of general formula (II) comprise at least one nucleophilic group which is an amine. In the reaction to form an amphiphilic polymeric material, the nucleophilic groups react with pendant units on the polymer backbone which are acylating groups to form a polymeric material as defined in the first aspect of the invention. Preferably, the pendant units are derived from maleic anhydride.

In one embodiment of the invention, each side chain precursor has two nucleophilic groups (for instance, X¹ is O or NR⁴) which may react with two acylating groups on two different backbone precursor molecules, thereby forming a cross-linked structure. In this case, P, in groups of formulae - NR⁴-Y-X¹P and -N-Y-X¹-P is "another backbone".

When the acylating group is derived from maleic anhydride, in some embodiments of the invention, only one side chain precursor reacts per maleic anhydride monomer. This leaves the unit derived from maleic anhydride with a free carboxylic acid group, which may be derivatised at a later stage in the method. This group may also be deprotonated to give an ionic pendant group in the polymeric material.

The reaction between the backbone precursors (for instance, PIP-*g*-MA) and the side chain precursors could be carried out in an organic solvent (such as toluene, xylene or tetrahydrofuran) and typically in the presence of an activator, for example, triethylamine at elevated temperature. The yield may be increased by removal of the water from the reaction mixture by azeotropic distillation since toluene and water form azeotropic mixtures which boil at a lower temperature than any of the components. The side chain precursor may also be reacted with a monoester derivative of PIP-*g-*MA for instance, the PIP-g-MaMme detailed above. The reaction of this monomethyl ester with the side chain precursor is typically carried out in an organic solvent such as toluene at an elevated temperature. The yield of ester may be increased by removing water from the reaction mixture by azeotropic distillation.

The synthesis of the amphiphilic polymeric material may achieved by mixing the intended side chain precursors with the backbone precursors, in the absence of solvent. This 'no-solvent' process eliminates the costs associated with purchasing and handling organic solvents, and removing the otherwise harmful materials from the polymer. It will be appreciated that this approach is also desirable in eliminating volatile organic compounds that may be harmful to the environment.

The side chain and backbone precursors may be either a solid, in fluid form, a liquid or a gel, provided that they can be mixed fairly efficiently. More preferably they will be either a liquid or finely ground solid. Alternatively, the backbone precursors are in liquid form and the side chain precursors are in solid form. In one embodiment of the invention, the side chain precursors are in liquid form and the backbone precursors are a finely ground solid. Most preferably both side chain and backbone precursors will be a liquid at the temperature at which the acylation reaction takes place.

In one preferred embodiment of the invention, the backbone precursors are mixed with the side chain precursors by dissolving or dispersing the backbone precursors in molten side chain precursors.

It will be appreciated by those skilled in the art that the reaction process may be performed using any piece of equipment that is capable of providing sufficient mixing. These may include reactors or other any vessels where agitation is provided by an overhead stirrer, a magnetic stirrer, most preferably mixing is achieved using an appropriate an extruder, z-blade mixer, batch mixer, U trough mixer, RT mixer, compounder, internal mixer, Banbury type mixer, two roll mill, Brabender type mixer, a wide blade mixer (or hydrofoil blade mixer), horizontal (delta or helical) blade mixer, kneader-reactor, or a related variation of one of these mixers such as such as a double z-blade mixer or twin screw extruder.

Increasing the temperature of the reaction mixture generally results in the side chain precursors melting, which allows efficient mixing, and in turn contributes to an increase in the rate of reaction. Therefore the temperature of the reaction will preferably be between 50°C and 300°C, more preferably between 100 and 250°C, even more preferably between 120 °C and 200 °C, and most preferably between 140°C and 180 °C. Preferably the mixing apparatus is supplied with an inert gas to prevent degradation of the polymeric materials. Alternatively the reactor may be placed under vacuum in order to ensure that air is excluded. The reaction can also be catalysed by addition of acid or base. Optionally water may be added to the reactor at the end of the reaction to hydrolyse any unreacted acylating groups. Hydrolysis of unreacted acylating groups can also advantageously increase the hydrophilicity and thus water compatibility or solubility of the materials.

Any remaining acylating groups may be preferably converted into acid groups by the addition of water to the material, or by an aging process. An aging process typically involves leaving the material in atmospheric air to ensure hydrolysis of any residual maleic anhydride by the atmospheric moisture. Alternatively the remaining acylating groups may be hydrolysed with the aid of a base catalyst, or by the addition of an alcohol (hydroxyl) or amine with or without base. By way of an example, any remaining maleic anhydride groups are typically converted into diacid groups by addition of water to the material.

The reaction mixture, at the end of the reaction, normally comprises unreacted starting materials which may include free side chain precursor and backbone precursor. There may be some residual catalyst, if this has been used in the reaction. The reaction generally produces no by-products. The amphiphilic polymeric material need not be purified from the reaction mixture, since it can be advantageous to have free side chain precursors in the final composition. The free side chain precursor may interact with the amphiphilic polymeric material and thereby improve its properties.

The amphiphilic polymeric material may be used in a variety of applications, such as in coatings, personal and household care formulations. A particularly desirable application is in the manufacture of a chewing gum base and/or chewing gum composition. Such compositions form aspects of the present invention. A typical chewing gum base comprises 2-90% by weight of the amphiphilic polymeric material, preferably, 2-50%, more preferably 2-25%, most preferably 3-20% by weight. The amphiphilic polymeric material may act as a substitute for part or all of the ingredients in the gum base which contribute to adhesiveness.

Alternatively, the gum base comprises no amphiphilic polymeric material. Instead, the amphiphilic Polymeric material is added to a chewing gum composition independently of the chewing gum base. Most typically, the amphiphilic polymeric material is added to both the gum base and chewing gum composition.

The chewing gum base comprises, in addition to the polymeric material, conventional ingredients known in the art.

The chewing gum base may comprise 0-6% by weight wax. Examples of waxes which may be present in the gum base include microcrystalline wax, natural wax, petroleum wax, paraffin wax and mixtures thereof. Waxes normally aid in the solidification of gum bases and improving the shelf-life and texture. Waxes have also been found to soften the base mixture, improve elasticity during chewing and affect flavour retention. Preferably, the gum base comprises substantially no wax, and these properties are provided by the polymeric material. However, in some embodiments wax is present and this works with the amphiphilic polymeric material (and optionally unreacted side chain precursor with it) to control the release of the active.

The chewing gum base may comprise an elastomeric material which provides desirable elasticity and textural properties as well as bulk. Suitable elastomeric materials include synthetic and natural rubber. More specifically, the elastomeric material is selected from butadiene-styrene copolymers, polyisobutylene and isobutylene-isoprene copolymers. It has been found that if the total amount of elastomeric material is too low, the gum base lacks elasticity, chewing texture and cohesiveness, whereas if the content is too high, the gum base is hard and rubbery. Typical gum bases contain 10-70% by weight elastomeric material, more typically 10-15% by weight. Typically, the polymeric material will form at least 1% by weight, preferably at least 10% by weight, more preferably at least 50% by weight of the elastomeric material in the chewing gum base. In some embodiments, the polymeric material completely replaces the elastomeric material in the chewing gum base.

Elastomer plasticisers (also known as elastomer solvents) aid in softening the elastomeric material and include methyl glycerol or pentaerythritol esters of rosins or modified rosins, such as hydrogenated, dimerized, or polymerized rosins or mixtures thereof. Examples of elastomer plasticisers suitable for use in the chewing gum base include the pentaerythritol ester of partially hydrogenated wood rosin, pentaerythritol ester of wood rosin, glycerol ester of partially dimerized rosin, glycerol ester of polymerised rosin, glycerol ester of tall oil rosin, glycerol ester of wood rosin and partially hydrogenated wood rosin and partially hydrogenated methyl ester of rosin; terpene resins including polyterpene such as d-limonene polymer and polymers of α-pinene or β-pinene and mixtures thereof. Elastomer plasticisers may be used up to 30% by weight of the gum base. The preferred range of elastomer solvent, however, is 2-18% by weight. Preferably it is less than 15% by weight. Alternatively, no elastomer solvent may be used.

The weight ratio of elastomer plus polymeric material to elastomer plasticiser is preferably in the range (1 to 50):1 preferably (2 to 10):1.

The chewing gum base preferably comprises a non-toxic vinyl polymer. Such polymers may have some affinity for water and include poly(vinyl acetate), ethylene/vinyl acetate and vinyl laurate/vinyl acetate copolymers. Preferably, the non-toxic vinyl polymer is poly(vinyl acetate). Preferably, the non-toxic vinyl polymer is present at 15-45% by weight of the chewing gum base. The non-toxic vinyl polymer should have a molecular weight of at least 2000.

In alternative embodiments, the chewing gum base comprises no vinyl polymer.

The chewing gum base preferably also comprises a filler, preferably a particulate filler. Fillers are used to modify the texture of the gum base and aid in its processing. Examples of typical fillers include calcium carbonate, talc, amorphous silica and tricalcium phosphate. Preferably, the filler is silica, or calcium carbonate. The size of the filler particle has an effect on cohesiveness, density and processing characteristics of the gum base on compounding. Smaller filler particles have been shown to reduce the adhesiveness of the gum base.

The amount of filler present in the chewing gum base is typically 0-40% by weight of the chewing gum base, more typically 5-15% by weight.

Preferably, the chewing gum base comprises a softener. Softeners are used to regulate cohesiveness, to modify the texture and to introduce sharp melting transitions during chewing of a product. Softeners ensure thorough blending of the gum base. Typical examples of softeners are hydrogenated vegetable oils, lanolin, stearic acid, sodium stearate, potassium stearate and glycerine. Softeners are typically used in amounts of about 15% to about 40% by weight of the chewing gum base, and preferably in amounts of from about 20% to about 35% of the chewing gum base.

A preferred chewing gum base comprises an emulsifier. Emulsifiers aid in dispersing the immiscible components of the chewing gum composition into a single stable system. Suitable examples are lecithin, glycerol, glycerol monooleate, lactylic esters of fatty acids, lactylated fatty acid esters of glycerol and propylene glycol, mono-, di-, and tri-stearyl acetates, monoglyceride citrate, stearic acid, stearyl monoglyceridyl citrate, stearyl-2-lactylic acid, triacyetyl glycerin, triethyl citrate and polyethylene glycol. The emulsifier typically comprises from about 0% to about 15%, and preferably about 4% to about 6% of the chewing gum base.

The chewing gum base detailed above may be used to form a chewing gum composition. The chewing gum composition may comprise a gum base and one or more sweetening or flavouring agents. Typically, the chewing gum composition comprises both a sweetening and a flavouring agent. The chewing gum composition may additionally comprise other agents, including nutraceutical actives, herbal extracts, stimulants, fragrances, sensates to provide cooling, warming or tingling actions, microencapsulates, abrasives, whitening agents and colouring agents.

The amount of gum base in the final chewing gum composition is typically in the range 5-95% by weight of the final composition, with preferred amounts being in the range 10-50% by weight, more preferably 15-25% by weight.

The chewing gum composition may comprise a variety of other ingredients, for instance a biologically active ingredient such as a medicament.

The biologically active ingredient is any substance which modifies a chemical or physical process in the human or animal body. Preferably, it is a pharmaceutically active ingredient and is, for instance, selected from anti-platelet aggregation drugs, erectile dysfunction drugs, decongestants, anaesthetics, oral contraceptives, cancer chemotherapeutics, psychotherapeutic agents, cardiovascular agents, NSAID's, NO Donors for angina, non-opioid analgesics, antibacterial drugs, antacids, diuretics, anti-emetics, antihistamines, antiinflammatories, antitussives, anti-diabetic agents (for instance, insulin), opioids, hormones and combinations thereof. Preferably, the active ingredient is a stimulant such as caffeine or nicotine. Alternatively, the active ingredient is an analgesic. A further example of an active ingredient is insulin.

In one embodiment of the invention, the biologically active ingredient is a non-steroidal anti-inflammatory drug (NSAID), such as diclofenac, ketoprofen, ibuprofen or aspirin. Alternatively the active ingredient is paracetamol (which is generally not classed as an NSAID).

In a different embodiment of the invention, the biologically active ingredient is a vitamin, mineral, or other nutritional supplement.

The biologically active ingredient may be an anti-emetic, for instance Dolasetron. Alternatively the biologically active ingredient is an erectile dysfunction drug, such as sildenafil citrate.

Generally the chewing gum composition comprises 0.01-20% wt active ingredient, more typically 0.1-5 wt%. The chewing gum composition may be in unit dosage form suitable for oral administration. The unit dosage form preferably has a mass in the range 0.5-4.5 g, for instance around 1 g. Generally, the chewing gum composition comprises 1-400 mg biologically active ingredient, more typically 1-10 mg, depending on the active ingredient. When the active ingredient is nicotine, for instance, the chewing gum composition typically comprises 1-5 mg nicotine. When the active ingredient is a non-steroidal anti-inflammatory drug, such as ibuprofen, the composition typically comprises 10-100 mg active ingredient.

In the laboratory, a HAAKE MiniLab Micro Compounder (Thermo Fisher Corporation) may be used to form both the gum base and the chewing gum composition.

In the case of the gum base, the ingredients are typically mixed together by adding them in stages at a temperature in the range 80-120 °C, typically around 100°C. After the gum base has formed, the material is extruded out of the MiniLab.

It will be noted that the MiniLab Compounder would not be used to mix large scale batches of chewing gum. An industrial scale machine, such as a Z-blade mixer would be used in this case.

The method of forming the chewing gum composition typically comprises blending the gum base with the sweetening and flavouring agents. Standard methods of production of chewing gum compositions are described in Formulation and Production of Chewing and Bubble Gum. ISBN: 0-904725-10-3, which includes manufacture of gums with coatings and with liquid centres.

Typically, chewing gum compositions are made by blending gum base with sweetening and flavouring agents in molten form, followed by cooling of the blend. Such a method may be used in the present invention.

The chewing gum composition may require heating to a temperature of around 100°C (for instance, in the range 80-120 °C) in order to uniformly mix the components. Amphiphilic polymeric material as made in the first aspect of the invention is added at either the gum base-forming step, or when the chewing gum composition is formed. The amphiphilic polymeric material of this invention, or alternatively, any amphiphilic polymeric material may be added during both of these steps.

Preferably the mixture is heated to a temperature in the range 80-120 °C, typically around 100°C. The mixture is generally cooled to a temperature in the range 40-80 °C, preferably 50-70°C. If biologically active ingredient is to be included in the composition, it is generally added at this stage.

The biologically active ingredient may be added in solid, molten or liquid form. Nicotine is generally added as an oil, for instance, although use of a solid form (e.g. nicotine on an ion exchange resin, such as Polacrilex™) is preferred. Before adding the active ingredient in step (ii) the active ingredient may be premixed with polymeric material and/or sweetening agent. Preferably, the sweetening agent is sorbitol.

After the mixing is complete, the chewing gum composition may be extruded.

During any of the steps of the method, the mixture may be stirred to improve homogeneity.

The final stage may comprise use of compression to form the chewing gum composition.

A unit dosage form of the chewing gum composition may be formed by extruding the chewing gum and shaping the extrudate to the desired form. The unit dosage form typically has a mass in the range 0.5-2.5 g, typically around 1 g. The dosage unit may take the form of a cylindrical or spherical body, or a tab.

Typically, the chewing gum composition comprises 5-95% by weight, preferably 10-50% by weight, more preferably 15-45% of the chewing gum base. Additional amphiphilic polymeric material may also be added to form the chewing gum composition, in an amount such that it comprises 1-15%, more preferably 3-15% of the chewing gum composition.

The steps to form the chewing gum composition may be carried out sequentially in the same apparatus, or may be carried out in different locations, in which case there may be intermittent cooling and heating steps.

The invention will now be illustrated further in the following Examples, and with reference to the accompanying drawings, in which:
Figure 1 compares the molecular weight distribution of a number of batches of P1 as determined by GPC;
Figure 2 compares the molecular weight distribution of samples of the graft copolymers P2, P3, and P4 with the LIR-403 backbone starting material as determined by GPC;
Figure 3 compares the molecular weight distribution of samples of the graft copolymers P6, P7, and P8 with the LIR-403 backbone starting material as determined by GPC;
Figure 4 compares the molecular weight distribution of samples of the graft copolymers P9, and P10 with the LIR-410 backbone starting material as determined by GPC;
Figure 5 compares the molecular weight distribution of samples of the graft copolymers P11, and P12 with the Isolene 40-S and MAGPI polyisoprene backbone starting materials as determined by GPC; and

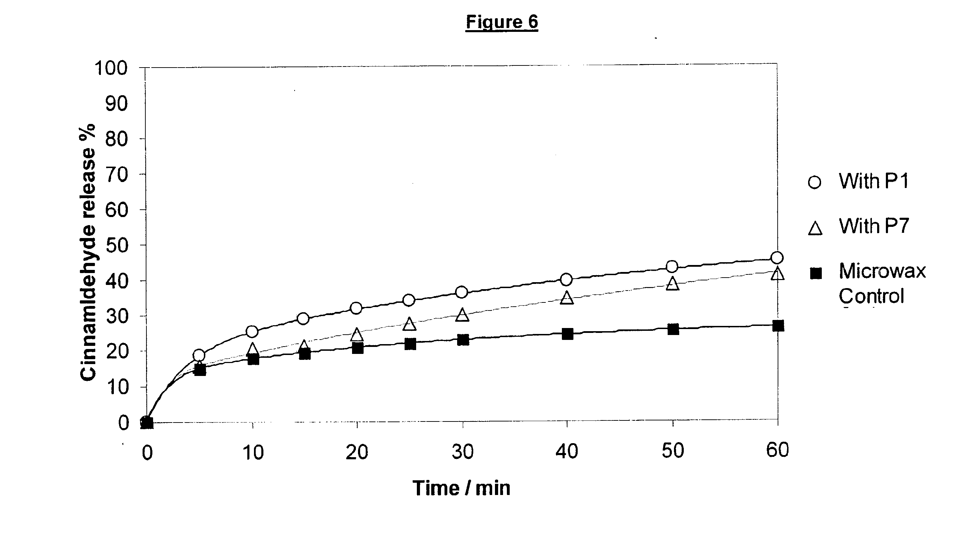

Figure 6 compares cumulative cinnamaldehyde release in artificial saliva from gum containing P1, P7, and a control gum determined using HPLC.

### Materials

Two different forms of PIP-*g*-MA have been used; the first supplied under the name LIR-403 by Kuraray and the other is a PIP-*g*-MA synthesized by the reaction of maleic anhydride with polyisoprene (Isolene 40-S) in 1,2-dichlorobenzene (See Example 17). This latter material will subsequently be referred to as maleic anhydride-grafted-polyisoprene (MAGPI) to avoid confusion with the generic term PIP-*g*-MA. The polyisoprene used in the synthesis of MAGPI, Isolene 40-S manufactured by Royal Elastomers, is a synthetic polyisoprene with a glass transition temperature of -65 °C, a typical molecular weight of 32,000, and a relatively broad molecular weight distribution compared with that of LIR-403. Subsequently the resulting MAGPI synthesized from lsolene 40-S has a similarly broader molecular weight distribution compared to LIR-403.

### Reference Example A: Determination of Molecular Weights of Polymeric Materials and Free MPEG

The polymer samples were analyzed using a PL-GPC50plus GPC system manufactured by Polymer Labs. The following conditions were used:
**Eluent:** THF stabilised with 250 ppm BHT
**Eluent RI:** 1.408.
**Flow Rate (mL/min):**1
**Temperature:** 40°C
**Column Set Name:** 2 Columns 30mm PL gel 5um MIXED-D
**Detector Name:** DRI
**Detector Calibration Curve:** Polystyrene Standards (538Da - 265000Da)

This apparatus was used to determine the molecular weights of all of the graft copolymers. In order to determine the amount of free MPEG present in the samples 10 different solutions of known concentration of MPEG 2000 in THF (0.05-2 mg/mL) were accurately prepared and analysed on the apparatus. The relevant intensity of the samples was then used to generate a calibration curve which was used to generate the concentration of free MPEG in the samples.

### Reference Example B: Determination of Degrees of Grafting with PEG using FT-IR

The analysis described below is used to calculate the degree of grafting of side chain precursor to backbone precursor. The analysis determines the amount of cyclic units derived from maleic anhydride in the backbone precursor starting material and product polymeric material. The degree of grafting calculation is based on the assumption that all units derived from maleic anhydride react with side chain precursors.

The analysis was carried out on a PerkinElmer Paragon 2000 Infrared spectrometer. Samples for analysis were dissolved in spectrometric grade chloroform and placed in a liquid cell (Barium fluoride plates separated by PTFE spacer) in a mounting bracket/carriage in an IR beam with known cell path length.

A sample of the batch of PIP-*g*-MA used to synthesize the graft copolymer was accurately weighed out, ∼0.1 g (+/- 0.05 g) into the stoppered conical flask and dissolved in 10 g of accurately weighed out chloroform. The FT-IR of the sample was collected, and the percentage transmission values measured at 1830 cm⁻¹ and at 1790 cm⁻¹ recorded. The sample of polymer was accurately weighed out, ∼1.5 g (+/- 0.5 g) into the stoppered conical flask, dissolved in 10 g of accurately weighed out chloroform, and studied by FT-IR in a similar manner. The Concentration of maleic anhydride in each sample was then calculated using the following formula: $μmole / g \left(in sample\right) = \frac{33600}{C} x \frac{{Log}_{10} % T ⁢ \left(at 1830.0⁢{cm}^{- 1}\right)}{ % T ⁢ \left(at 1790.0⁢{cm}^{- 1}\right)}$ where C is the concentration in the test solution (quoted in mg g⁻¹). The percentage conversion of maleic anhydride can then be determined by comparing the values from the backbone and graft copolymer.

This method can also be used to determine the degrees of grafting in the other polymeric materials (P2-P8). The method does not work for P9 and P10, as these are synthesised from LIR-410 which does not comprise cyclic units derived from maleic anhydride.

### Reference Example C: Cinnamaldehyde release tests on chewing gums - Experimental Method

Each pre-shaped piece of gum was weighed before chewing, and the weight recorded to allow estimation of the total quantity of drug in each piece.

A 'ERWEKA DRT-1' chewing apparatus from AB FIA was used, which operates by alternately compressing and twisting the gum in between two mesh grids. A water jacket, with the water temperature set to 37°C was used to regulate the temperature in the mastication cell to that expected when chewed in vivo, and the chew rate was set to 40 'chews' per minute. The jaw gap was set to 1.6 mm.

40 mL artificial saliva (composed of an aqueous solution of various salts, at approx pH 6 - see below, Table 1) was added to the mastication cell, then a plastic mesh placed at its bottom. A piece of gum of known weight was placed on the centre of the mesh, and a second piece of mesh put on top.

### Artificial saliva:

**Table 1: Artificial Saliva Formulation**

| **Components** | **Quantity (mmol/L)** |
|---|---|
| KH₂PO₄ | 2.5 |
| Na₂HPO₄ | 2.4 |
| KHCO₃ | 15 |
| NaCl | 10 |
| MgCl₂ | 1.5 |
| CaCl₂ | 1.5 |
| Citric acid | 0.15 |
| PH adjusted to 6.7 with HCl | |

### Procedure for Analysing the Release Profiles of Active Ingredients from Gum

The parameters in Table 2 were always used in chewing unless otherwise noted.

**Table 2: Chewing Parameters**

| **Parameter** | **Value** |
|---|---|
| Temperature | 37°C |
| Gaps between jaws | 1.6 mm |
| Twisting angle | 20° |
| Chew Frequency | 40 strokes/min |

At the start of each run, the cell containing the artificial saliva and gum was left for 5 minutes so that the system could equilibrate to 37°C. The gum was then masticated. A sample volume of 0.5 mL was then withdrawn from the test cell periodically during a release run (5, 10, 15, 20, 25, 30, 40, 50 and 60 minutes).

All the samples were then analysed by HPLC using a typical Perkin Elmer HPLC Series 200 system, equipped with an autosampler, pump, and diode array detector. Data handling and instrument control was provided via Totalchrom v 6.2 software. The columns and mobile phase were adjusted to the active ingredient as follows:

Cinnamaldehyde details: Column - Varian Polaris 5u C18-A 250 x 4.6 m. Mobile Phase - Acetonitrile/0.05% orthophosphoric acid (60/40). Flow rate - 1 mL/min. Detection-UV 250 nm. Inj vol - 5 uL

Two injections into the HPLC column were used for each sample, to ensure reproducibility.

### Example 1: Reaction of polyisoprene-graft-maleic anhydride with poly(ethylene glycol) methyl ether (Preparation of P1ₐ) in a reaction flask (Comparative)

PIP-*g*-MA (300 g, Polyisoprene-*graft-*maleic anhydride obtained from Kuraray, LIR-403 grade) having the CAS No. 139948-75-7, an average *M_{w}* of approximately 25,000 and a typical level of grafting of MA of around 1.0 mol%, and poly(ethylene glycol) methyl ether (PEGME) (212 g, purchased from Clariant), having an average molecular weight of 2000 were weighed out and added to a reaction flask with a 1 L capacity, equipped with an overhead stirrer. The PIP-g-MA was present as a liquid, and PEGME as a solid. A flow of nitrogen gas was passed through the vessel, which was then heated to 120°C using an oil bath. Stirring of the molten mixture then commenced and the vessel was then heated to 160 °C.

The reaction mixture was maintained at this temperature for a total of approximately 24 hours. Following this it was allowed to cool to below 100°C and water (400 mL) was then added. The mixture was allowed to cool to room temperature and the water was removed by filtration, following which the product was dried under vacuum at 40-50 °C.

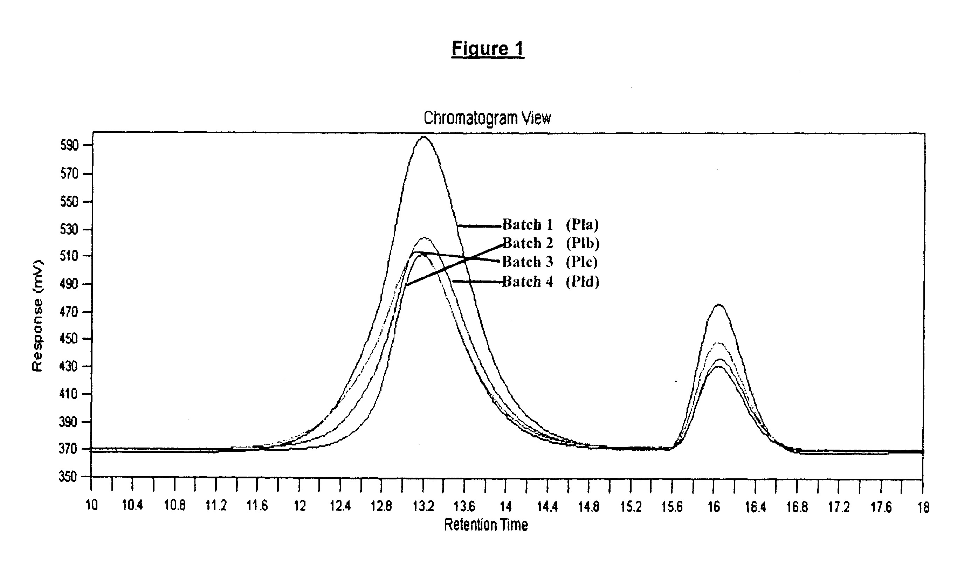

The product was studied using GPC and FTIR. A comparison of the GPC chromatogram of this and other samples of P1 may be found in Figure 1.

### Example 2: Reaction of polyisoprene-graft-maleic anhydride with Poly(ethylene glycol) methyl ether (Preparation of P1_{b}) in a Batch Ploughshare Mixer (Comparative)

PIP-*g*-MA (738 g, Polyisoprene-*graft*-maleic anhydride obtained from Kuraray, LIR-403 grade) having the CAS No. 139948-75-7, an average *M*_{w} of approximately 25,000 and a typical level of grafting of MA of around 1.0 mol%, and poly(ethylene glycol) methyl ether (PEGME) (526 g, purchased from Clariant), having an average molecular weight of 2000 were weighed out and added to a Lodige 3 L batch ploughshare mixer, equipped with an overhead stirrer. A flow of nitrogen gas was passed through the vessel, which was then heated to 120°C using an oil bath. Stirring of the molten mixture then commenced and the vessel was then heated to 160 °C. An essentially homogenous mixture was formed, with the backbone precursors dissolved in the side chain precursors.

The reaction mixture was maintained at this temperature for a total of approximately 24 hours. Following this it was allowed to cool to below 100°C and water (1 L) was then added. The mixture was allowed to cool to room temperature and the water was removed by filtration, following which the product was dried under vacuum at 40-50 °C.

The product was studied using GPC and FTIR. A comparison of the GPC chromatogram of this and other samples of P1 may be found in Figure 1.

### Example 3: Reaction of polyisoprene-graft-maleic anhydride with poly(ethylene glycol) methyl ether (Preparation of P1_{c}) in a Z-Blade Mixer (Comparative)

PIP-*g*-MA (385 g, Polyisoprene-*graft*-maleic anhydride obtained from Kuraray, LIR-403 grade) having the CAS No. 139948-75-7, an average *M*_{w} of approximately 25,000 and a typical level of grafting of MA of around 1.0 mol%, and poly(ethylene glycol) methyl ether (PEGME) (293 g, purchased from Clariant), having an average molecular weight of 2000 were weighed out and added to a Winkworth z-blade mixer, equipped with an overhead stirrer. A flow of nitrogen gas was passed through the vessel, which was then heated to 120°C using an oil bath. Stirring of the molten mixture then commenced and the vessel was then heated to 160°C.

The reaction mixture was maintained at this temperature for a total of approximately 24 hours. Following this it was allowed to cool to below 100°C and water (0.5 L) was then added. The mixture was allowed to cool to room temperature and the water was removed by filtration, following which the product was dried under vacuum at 40-50 °C.

The product was studied using GPC and FTIR. A comparison of the GPC chromatogram of this and other samples of P1 may be found in Figure 1.

### Example 4: Reaction of polyisoprene-graft-maleic anhydride with poly(ethylene glycol) methyl ether in toluene solvent (Preparation of P1_{d}) (Comparative)

PIP-*g*-MA (5.25 Kg, Polyisoprene-*graft*-maleic anhydride obtained from Kuraray, LIR-403 grade) having the CAS No. 139948-75-7, an average *M*_{w} of approximately 25,000 and a typical level of grafting of MA of around 1.0 mol%, and poly(ethylene glycol) methyl ether (PEGME) (4.00 kg, purchased from Aldrich), having an average molecular weight of 2000 were weighed out and added to an airtight jacketed reactor with a twenty litre capacity, equipped with an overhead stirrer. Toluene (10.0 Kg) was added to the reactor to dissolve the starting materials, and a flow of nitrogen gas passed through the vessel.

The vessel was then heated to reflux the toluene (115-116 °C) using an oil bath set to 140°C connected to the reactor's jacket. A Dean-Stark trap and condenser between the vessel and nitrogen outlet were used in order to remove any water from the poly(ethylene glycol) methyl ether and toluene by means of azeotropic distillation. Thus water was collected in the Dean-Stark trap over the course of the reaction.

The reaction mixture was refluxed for a total of approximately 24 hours. The reaction can also be catalysed by addition of acid or base. The product was purified in 2 L batches by adding the still warm (50°C) material to 3 L tanks of deionised water. In the case of each batch the water was removed by filtration and the process of washing the graft copolymer with deionised water, and removing the water wash with the aid of filtration repeated a further five times. The product was dried under vacuum at 50 °C overnight.

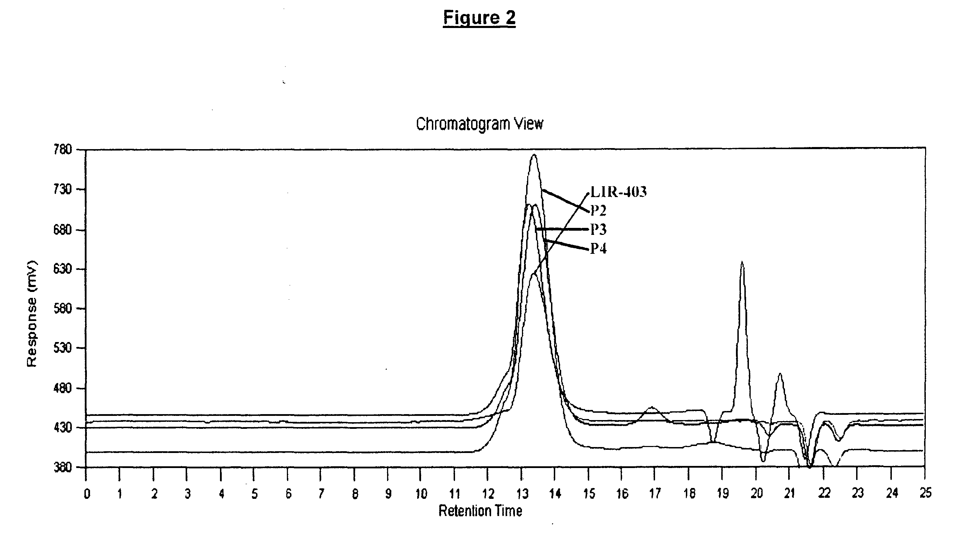

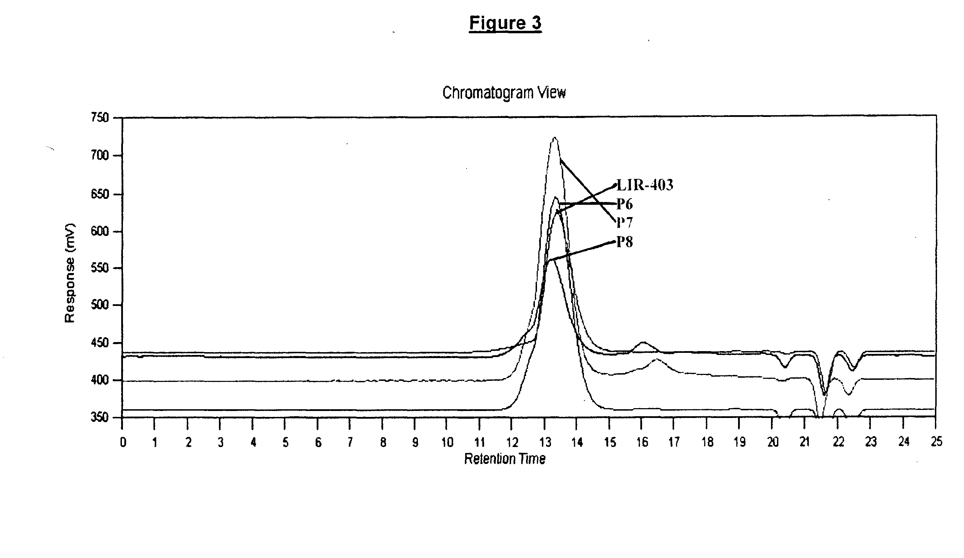

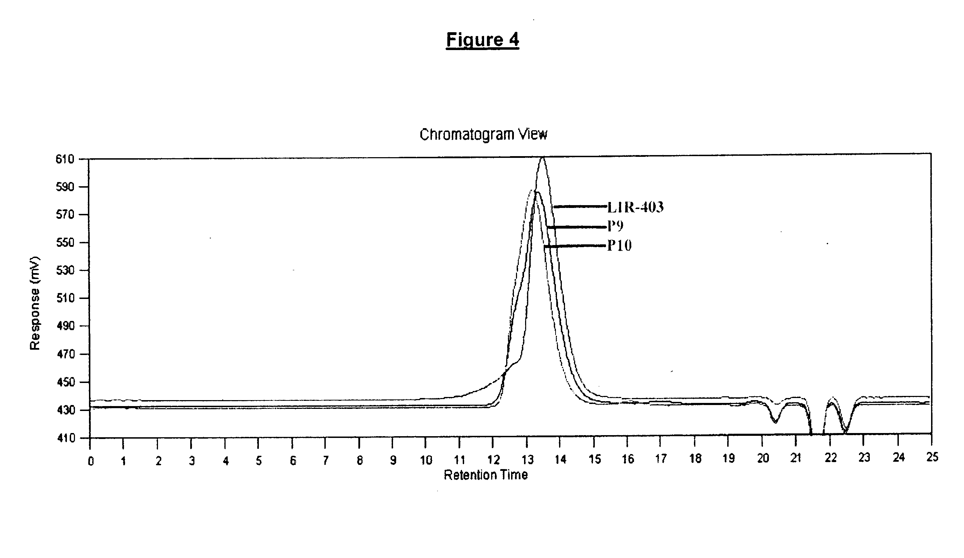

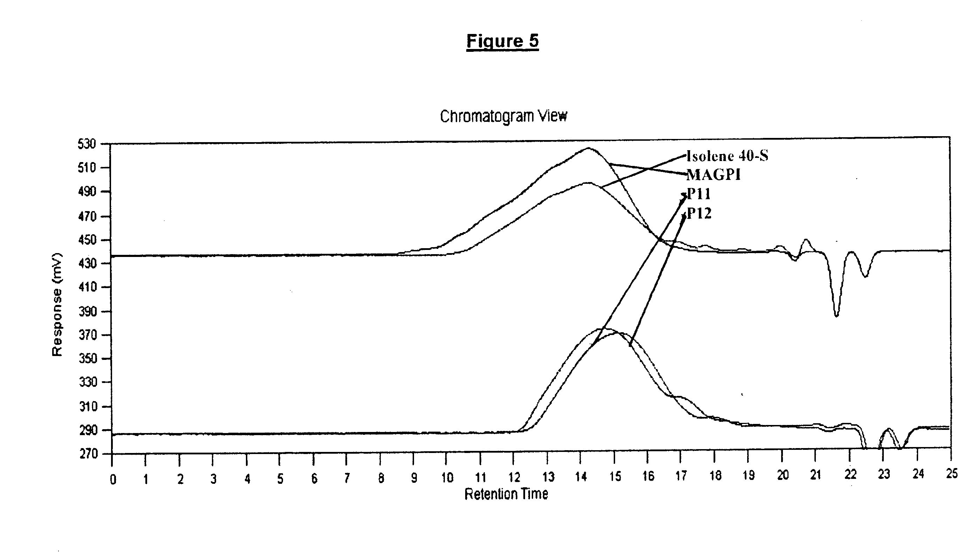

The product was studied using GPC and FTIR. A comparison of the GPC chromatogram of this and other samples of P1 may be found in Figure 1, and serves as a comparison with the data for the samples of polyether amine functionalised amphiphilic polymeric material (Figures 2-5).

### Example 5: Reaction of polyisoprene-graft-maleic anhydride with an Amine Functionalised Polyether (Jeffamine M-1000) (Preparation of P2ₐ) with a 1:1 Ratio of graft to each maleic anhydride group

PIP-*g*-MA (150.0 g, Polyisoprene-*graft*-maleic anhydride obtained from Kuraray, LIR-403 grade) having the CAS No. 139948-75-7, an average *M*_{w} of approximately 25,000 and a typical level of grafting of MA of around 1.0 mol%, and an amine functionalised polyether (Jeffamine M-1000, 21.8 g, obtained from Huntsman), having an average molecular weight of 1000 were added to a reaction flask with a 250 mL capacity, equipped with an overhead stirrer. A flow of nitrogen gas was passed through the vessel, which was then heated to 120°C. using an oil bath. Stirring of the molten mixture then commenced and the vessel was then heated to 160 °C.

The reaction mixture was maintained at this temperature for a total of approximately 24 hours. Following this it was allowed to cool to approximately 80 °C and water (200 mL) was then added. The mixture was allowed to cool to room temperature and the water was removed by decantation, following which the product was dried under vacuum at 40-50 °C.

The structure was confirmed using GPC and FTIR.

### Example 6: Reaction of polyisoprene-graft-maleic anhydride with an Amine Functionalised Polyether (Jeffamine M-1000) (Preparation of P2_{b}) with a 1:1 Ratio of graft to each maleic anhydride group,

This product was prepared using the same methodology as Example 5 using LIR-403 (500 g) of an amine functionalised polyether (Jeffamine M-1000, 72.7 g), and a 1 L reaction flask. It was not necessary to add water to the product due to the efficiency of the reaction between the polymeric backbones and this graft determined from previous experiment. The structure was confirmed using GPC and FTIR.

### Example 7: Reaction of polyisoprene-graft-maleic anhydride with an Amine Functionalised Polyether (Jeffamine M-1000) (Preparation of P3ₐ) with a 2:1 Ratio of graft to each maleic anhydride group

This product was prepared using the same methodology as Example 5 using 43.6 g of an amine functionalised polyether (Jeffamine M-1000).

The structure was confirmed using GPC and FTIR.

### Example 8: Reaction of polyisoprene-graft-maleic anhydride with an Amine Functionalised Polyether (Jeffamine M-1000) (Preparation of P3_{b}) with a 2:1 Ratio of graft to each maleic anhydride group using an organic solvent

This material was prepared using the same methodology as Example 7 but used toluene as a solvent.

PIP-*g*MA (150.0 g, Polyisoprene-*graft*-maleic anhydride obtained from Kuraray, LIR-403 grade) having the CAS No. 139948-75-7, an average *M*_{w} of approximately 25,000 and a typical level of grafting of MA of around 1.0 mol%, and an amine functionalised polyether (Jeffamine M-1000, 21.8 g, obtained from Huntsman), having an average molecular weight of 1000 were added to a reaction flask with a 250 mL capacity, equipped with an overhead stirrer. A flow of nitrogen gas was passed through the vessel, which was then heated to 120°C using an oil bath. Toluene (195.0 g) was added to the reactor to dissolve the starting materials, and a flow of nitrogen gas passed through the vessel.

The vessel was then heated to reflux the toluene in an oil bath set to 170°C connected to the reactor's jacket. A Dean-Stark trap and condenser between the vessel and nitrogen outlet were used in order to remove any water from the poly(ethylene glycol) methyl ether and toluene by means of azeotropic distillation. This water was collected in the Dean-Stark trap over the course of the reaction.

The reaction mixture was maintained at this temperature for a total of approximately 24 hours. Following this it was allowed to cool to approximately 80 °C and precipitated in water (2 L). The stirred mixture was allowed to cool for 30, min, after which the water was removed by decantation, and the product was dried under vacuum at 40-50 °C.

The structure was confirmed using GPC and FTIR.

### Example 9: Reaction of polyisoprene-graft-maleic anhydride with an Amine Functionalised Polyether (Jeffamine M-1000) (Preparation of P3_{c}) with a 2:1 Ratio of graft to each maleic anhydride group

This product was prepared using the same methodology as Example 6 using LIR-403 (500 g) and an amine functionalised polyether (Jeffamine M-1000, 43.6 g), and a 1 L reaction flask. The structure was confirmed using GPC and FTIR.

### Example 10: Reaction of polyisoprene-graft-maleic anhydride with an Amine Functionalised Polyether (Jeffamine M-1000) (Preparation of P4) with a 2.8:1 Ratio of graft to each maleic anhydride group

This product was prepared using the same methodology as Example 6 using LIR-403 (62.3 g) and an amine functionalised polyether (Jeffamine M-1000, 25.3 g), and a 250 mL reaction flask. The structure was confirmed using GPC and FTIR.

### Example 11: Reaction of polyisoprene-graft-maleic anhydride with an Amine Functionalised Polyether (Jeffamine M-2070) (Preparation of P5) with a 0.5:1 Ratio of graft to each maleic anhydride group

This product was prepared using the same methodology as Example 6 using LIR-403 (500 g) and an amine functionalised polyether (Jeffamine M-2070, 72.7 g), and a 1 L reaction flask. The structure was confirmed using GPC and FTIR.

### Example 12: Reaction of polyisoprene-graft-maleic anhydride with an Amine Functionalised Polyether (Jeffamine M-2070) (Preparation of P6) with a 1:1 Ratio of graft to each maleic anhydride group

This product was prepared using the same methodology as Example 6 using LIR-403 (500 g) and an amine functionalised polyether (Jeffamine M-2070, 145.0 g), and a 1 L reaction flask. The structure was confirmed using GPC and FTIR.

### Example 13: Reaction of polyisoprene-graft-maleic anhydride with an Amine Functionalised Polyether (Jeffamine M-2070) (Preparation of P7) with a 2:1 Ratio of graft to each maleic anhydride group

This product was prepared using the same methodology as Example 6 using LIR-403 (500 g) and an amine functionalised polyether (Jeffamine M-2070, 290.0 g), and a 1 L reaction flask. The structure was confirmed using GPC and FTIR.

### Example 14: Reaction of polyisoprene-graft-maleic anhydride with an Amine Functionalised Polyether (Jeffamine M-2070) (Preparation of P8) with a 2.8:1 Ratio of graft to each maleic anhydride group

This product was prepared using the same methodology as Example 6 using LIR-403 (61.8 g) and an amine functionalised polyether (Jeffamine M-2070, 50.18 g), and a 250 mL reaction flask. The structure was confirmed using GPC and FTIR.

### Example 15: Reaction of polyisoprene-graft-maleic acid monomethyl ester with an Amine Functionalised Polyether (Jeffamine M-1000) (Preparation of P9) with a 1:1 Ratio of graft to each maleic acid mono ester group

This product was prepared using the same methodology as Example 6 using LIR-410 (60 g) and an amine functionalised polyether (Jeffamine M-1000, 24.5 g), and a 250 mL reaction flask. The structure was confirmed using GPC and FTIR.

### Example 16: Reaction of polyisoprene-graft-maleic acid monomethyl ester with an Amine Functionalised Polyether (Jeffamine M-2070) (Preparation of P10) with a 1:1 Ratio of graft to each maleic acid mono ester group

This product was prepared using the same methodology as Example 6 using LIR-410 (60 g) of an amine functionalised polyether (Jeffamine M-2070, 50.0 g), and a 250 mL reaction flask. The structure was confirmed using GPC and FTIR.

### Example 17: Synthesis of maleic anhydride grafted polyisoprene (MAGPI)

Polyisoprene (Isolene 40S, supplied by Royal Elastomers, 72 g), maleic anhydride (1.0 g), and 1,2-dichlorobenzene were weighed out into a 3 neck round bottom flask. The reaction flask was equipped with an overhead stirrer, and condenser and thoroughly purged with nitrogen gas. Stirring of the reaction mixture then commenced, and the reaction mixture was rapidly heated up under a still nitrogen atmosphere. The reaction mixture was refluxed for five hours (180°C). After this period the solvent from the reaction mixture was distilled off (under vacuum), and the remaining material allowed to cool to room temperature. This was then washed with acetone (3 x 100 m L) in-order to remove any un-reacted MA. The product was then dried under vacuum at 100°C.

To avoid confusion with the generic term polyisoprene-graft-maleic anhydride (PIP-g-MA) the products of these reactions will be referred to as MAGPI.

### Example 18: Reaction of MAGPI with an Amine Functionalised Polyether (Jeffamine M-1000) (Preparation of P11) with a 2:1 Ratio of graft to each maleic anhydride group

This product was prepared using the same methodology as Example 6 using MAGPI (60 g) and an amine functionalised polyether (Jeffamine M-1000, 27.9 g), and a 250 mL reaction flask. The structure was confirmed using GPC and FTIR.

### Example 19: Reaction of MAGPI with an Amine Functionalised Polyether (Jeffamine M-2070) (Preparation of P12) with a 2:1 Ratio of graft to each maleic anhydride group

This product was prepared using the same methodology as Example 6 using MAGPI (60 g) and an amine functionalised polyether (Jeffamine M-2070, 55.8 g), and a 250 mL reaction flask. The structure was confirmed using GPC and FTIR.

### Example 20: Preparation of Gum Base and Chewing Gum

### Chemicals

Calcium carbonate (CaCO₃), ester gum, hydrogenated vegetable oil (HVO), polyisobutylene (PIB), poly(vinyl acetate) (PVAc), glyceromonostearate (GMS), microwax, sorbitol liquid, sorbitol solid, and peppermint oil, were all food grade materials obtained from the Gum Base Company. Cinnamaldehyde (98+%) was obtained from Fisher-Scientific UK.

### Mixing of the Chewing Gum and Chewing Gum Base

The chewing gum base had the composition as shown in the table below:

**Table 3: Recipe for the Manufacture of the Gum Bases**

| **Stage** | **Component** | **% Composition** | **Mass/g** |
|---|---|---|---|
| 1 | PIB | 13 | 1.04 |
| | PVAc | 6 | 0.48 |
| | CaCO₃ | 6 | 0.48 |
| | Ester Gum | 3.6 | 0.288 |
| 2 | Ester Gum | 5.4 | 0.432 |
| | CaCO₃ | 9 | 0.72 |
| 3 | PVAc | 9 | 0.72 |
| | Ester Gum | 9 | 0.72 |
| | CaCO₃ | 15 | 1.2 |
| 4 | HVO | 12 | 0.96 |
| | GMS | 6 | 0.48 |
| | **X** | 6 | 0.48 |
| | Total | 100 | 8 |

*X is either microcrystalline wax in the case of the S3 control, P1 or P7. HVO = hydrogenated vegetable oil, PVAc= poly(vinyl acetate).*

The gum base materials were mixed on a Haake Minilab micro compounder manufactured by the Thermo Electron Corporation, which is a small scale laboratory mixer/extruder. The screws were set to co-rotate at 80 turns/min.

The ingredients were mixed together in four steps, the gum only being extruded after the final step. The gum base was mixed at 100°C.

The chewing gum was mixed according to the following table.

| **Stage** | **Time** | **Component** | **Amount** |
|---|---|---|---|
| 1 | 15 min | 37.5% Gum Base Containing **X** | 3 g |
| | | 10% Sorbitol Liquid | 0.8 g |
| | | 17% Sorbitol Powder | 1.36 g |
| 2 | 15min | 25.5% Sorbitol Powder | 2.04 g |
| | | 6% **X** | 0.48 g |

**Table 4: Ingredients for the Chewing Gum**

| | | | |
|---|---|---|---|
| | | 3% Sorbitol Liquid | 0.24 g |
| | | 1% Cinnamaldehyde Flavour | 0.08 mL |
| | 30 min | TOTAL | 8g |

*X is either P1, or P7, microcrystalline wax in the case of the S3 control.*

The gum was mixed using the same equipment as the base and extruded after the final step. The gum was mixed at 60°C. In stage 1 the sorbitol liquid and powder were premixed prior to adding them to the gum.

The gums were tested using the method described in Reference Example C. The fastest and highest release profile was observed for the formulation containing P1. The release rate from the P7 gum formulations was comparatively slow compared with those from P1 during the period between the 5 th and 20^{th} minutes. It subsequently increased to a level above that of P1, so that the total percentage amount of cinnamaldehyde released from the P7 and P1 gums is almost identical by the end of the experiment. The microwax control by contrast to the formulations containing the two polymers, has a consistently lower release rate after 5 minutes; the total amount of cinnamaldehyde released at the end of the experiment is approximately half that of the other two formulations.

A series of gum formulations were made on a laboratory compounder using either P1, P7 or in the case of the control, microwax. The P1 was P1_{d}, i.e. prepared in accordance with Example 4, but any of P1ₐ-P1_{c} would also be suitable. The finished gum samples were masticated in artificial saliva and the release of cinnamaldehyde, added as a flavour, monitored via HPLC (Figure 1). The slowest release was observed with the microwax control. The fastest release was observed from the gum containing P1, with the formulation containing P7 observed to have only a slightly slower release profile.

### Summary of Results

In these results, the terms "graft" and "side chain precursor" are used interchangeably. The backbones of each of the polymers synthesised are derived from polyisoprene to which maleic anhydride has been grafted. The level of grafting of MA is typically around 1.0 mol% in the LIR-403 PIP-*g*-MA used to demonstrate the concept. In PIP-g-MaMme the same level was 2.7 mol% of the mono-acid mono-methyl ester of MA. The level of grafting depends on the degree of functionalisation of the polyisoprene. For example, in P1 the number of grafts per chain is generally between 1 and 7, whereas in P2 it is between 1 and 10.

Table 5 lists a number of polymers synthesised from PIP-g-MA or PIP-g-MaMme and Jeffamine M-1000 and M-2070.

**Table 5: Properties of Graft Copolymers Synthesised from Jeffamines. Mₙ = Number Average Molecular Weight, PDI ₌ Polydispesity Index; both determined by GPC.**

| **Polymer** | **Backbone** | **Graft** | **Ratio of Graft to Functional group** | ***M*ₙ (g mol⁻¹)** | **PDI** |
|---|---|---|---|---|---|
| P2ₐ | LIR-403 | M1000 | 1 to 1 | 24600 | 1.18 |
| P3_{c} | LIR-403 | M1000 | 2 to 1 | 23200 | 1.16 |
| P4 | LIR-403 | M1000 | 2.8 to 1 | 22400 | 1.16 |
| P5 | LIR-403 | M2070 | 0.5 to 1 | 21710 | 1.19 |
| P6 | LIR-403 | M2070 | 1 to 1 | 23850 | 1.16 |
| P7 | LIR-403 | M2070 | 2 to 1 | 25120 | 1.15 |
| P8 | LIR-403 | M2070 | 2.8 to 1 | 31340 | 1.19 |
| P9 | LIR-410 | M1000 | 1 to 1 | 22750 | 1.20 |
| P10 | LIR-410 | M2070 | 1 to 1 | 25930 | 1.16 |
| P11 | MAGPI | M1000 | 2 to 1 | 13630 | 1.77 |
| P12 | MAGPI | M2070 | 2 to 1 | 19530 | 1.67 |

The ratio of graft to maleic anhydride can easily be varied to achieve different loadings of the graft on the backbone and thus different properties in the resulting polymeric material. Polymeric materials with a higher degree of grafting will tend to be more hydrophilic and are likely to be easier to disperse or dissolve in water. The degree of grafting was in all cases confirmed by FT-IR, here the disappearance of the peaks at 1790 and 1830 cm⁻¹ from the maleic anhydride was monitored. GPC was used to determine the molecular weight distribution of the resulting products and the amount of free polyether amine graft. For comparison the GPC chromatograms of samples synthesised using the hydroxyl functionalised polyether, in particular methoxy poly(ethylene glycol), are depicted in Figure 1. Two peaks are observed, one from that of the graft copolymeric material, and one from free polyether graft at higher retention time (corresponding with lower molecular weight). Figures 2-5 depict the GPC traces of the samples of polymers synthesised using the amine functionalised polyethers. As will be apparent from the data, in contrast to the case with hydroxyl functionalised polymers, the amines have reacted efficiently with the maleic anhydride groups leaving very little free graft. This means a smaller quantity of graft needs be added to the reaction to achieve the same degree of grafting, and the process is subsequently more efficient than when MPEG is utilised. Alternatively it is possible to increase the degree of grafting with amine functionalised polyether beyond that which is possible using MPEG. If desired it is still possible to use an excess of Jeffamine (for instance P4 and P8) to increase the probability that every maleic anhydride group and/or acid group is consumed. Unless it is removed by purification this will inevitably lead to a material with a greater percentage of free graft in its composition. Therefore using only a small excess of graft is preferred, using a stoichiometric amount is preferred to a greater degree. Slightly less free graft was observed in the cases where the lower molecular weight amine polyether was used. This is due to the tendency of lower molecular weight polymers to react faster than the higher molecular weight species, and this trend is also observed with the hydroxyl functionalised PEGS.

## Claims

1. A chewing gum base comprising an amphiphilic polymeric material which comprises a straight or branched chain carbon-carbon backbone and a multiplicity of side chains attached to the backbone, wherein the side chains have the formula (I) 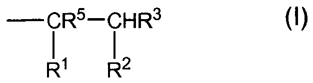
wherein R¹ and R² are each, independently H, -C(O)WR⁴ or-C(O)Q, provided that at least one of R¹ and R² is the group -C(O)Q;
wherein W is O or NR⁴; and Q is a group of formula -NR⁴-Y-X¹P;
or R¹ and R² together form a cyclic structure together with the carbon atoms to which they are attached, of formula (II) 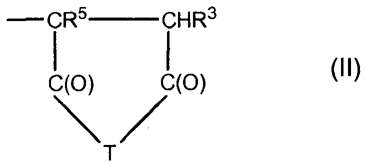
R³, R⁴ and R⁵ are each independently, H or C₁₋₆ alkyl;
T is a group of formula -N-Y-X¹-P;
wherein, X¹ is O, S, (CH₂)ₙ, NR⁴ or is absent; wherein n is 1-6;
P is H; and
Y is a hydrophilic polymeric group that is a poly(alkylene oxide), polyglycidol, poly(vinyl alcohol), poly(styrene sulphonate) or poly(acrylic acid).

2. A chewing gum base according to claim 1, wherein the hydrophilic polymeric group Y is a polyalkylene oxide.

3. A chewing gum base according to claim 2, wherein the polyalkylene oxide has general formula (ZO)_{b} wherein Z is an alkylene group having from 2 to 4 carbon atoms and b is an integer in the range 1 to 125.

4. A chewing gum base according to claim 1, wherein the polyalkylene oxide is a random, statistical, alternating or block copolymer, or a combination of two of these, of two or more monomer units ZO, wherein each Z is, independently an alkylene group having from 2 to 4 carbon atoms.

5. A chewing gum base according to any preceding claim, wherein the backbone of the said polymeric material is derived from a homopolymer of an ethylenically unsaturated hydrocarbon monomer or from a copolymer of two or more ethylenically-unsaturated polymerisable hydrocarbon monomers, and the side chains are hydrophilic.

6. A chewing gum base according to claim 5, wherein the carbon-carbon polymer backbone is derived from a homopolymer of an ethylenically-unsaturated polymerisable hydrocarbon monomer containing 4 or 5 carbon atoms.

7. A chewing gum base according to claim 6, wherein the carbon-carbon polymer backbone is derived from a homopolymer of isobutylene, butadiene or isoprene.

8. A chewing gum composition comprising an amphiphilic polymeric material which comprises a straight or branched chain carbon-carbon backbone and a multiplicity of side chains attached to the backbone, wherein the side chains have the formula (I) 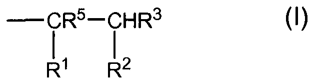
wherein R¹ and R² are each, independently H, -C(O)WR⁴ or -C(O)Q, provided that at least one of R¹ and R² is the group -C(O)Q;
W is O or NR⁴; and Q is a group of formula -NR⁴-Y-X¹P;
or R¹ and R² together form a cyclic structure together with the carbon atoms to which they are attached, of formula (II) 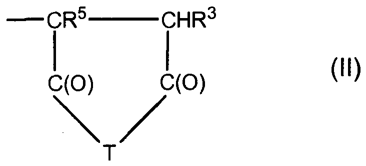
R³, R⁴ and R⁵ are each independently, H or C₁₋₆ alkyl;
T is a group of formula -N-Y-X¹-P;
wherein, X¹ is O, S, (CH₂)ₙ, NR⁴ or is absent; wherein n is 1-6;
P is H; and
Y is a hydrophilic polymeric group that is a poly(alkylene oxide), polyglycidol, poly(vinyl alcohol), poly(styrene sulphonate) or poly(acrylic acid);
and one or more sweetening or flavouring agents.

9. A chewing gum composition according to claim 8, which comprises the chewing gum base as defined in any of claims 1-7.

10. A chewing gum composition according to claim 8 or 9, further comprising a medicament.

11. An amphiphilic polymeric material as defined in any of claims 1-7, wherein the carbon-carbon backbone is derived from a homopolymer of isoprene, and in the formula (I) or (II) X¹ is (CH₂)ₙ or is absent; and P is H.

12. A method for making an amphiphilic polymeric material according to claim 11, wherein backbone precursors comprising pendant units of general formula (III) 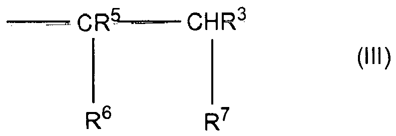 wherein R³ is H or C₁₋₆ alkyl, R⁵ is H or C₁₋₆ alkyl and R⁶ and R⁷ are H or an acylating group, provided at least one of R⁶ and R⁷ is an acylating group, or R⁶ and R⁷ are linked to form, together with the carbon atoms to which they are attached, a group of formula (IV): 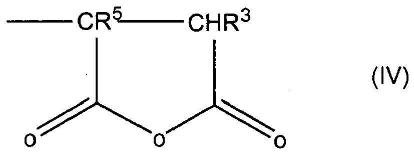 are reacted with side chain precursors of general formula (V) in a reaction mixture
HR⁴N-Y-X¹H (V)
wherein X¹ is selected from (CH₂)ₙ or is absent; wherein n is 1-6;
and R⁴ is H or C₁₋₆ alkyl; and
Y is a hydrophilic polymeric group that is a poly(alkylene oxide), polyglycidol, poly(vinyl alcohol), poly(styrene sulphonate) or poly(acrylic acid);
wherein in the method, the amine group HR⁴N in compound of formula (V) reacts with the units of general formula (III) or (IV) to give the amphiphilic polymeric material with side chains of general formula (1) 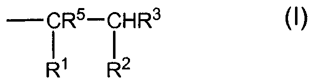
wherein R¹ is H, -C(O)WR⁴ or -C(O)Q; and R² is H, -C(O)WR⁴ or -C(O)Q; provided that at least one of R¹ and R² is the group -C(O)Q;
wherein W is O or NR⁴; and Q is a group of formula -NR⁴-Y-X¹P;
or R¹ and R² together form a cyclic structure together with the carbon atoms to which they are attached, of formula (II) 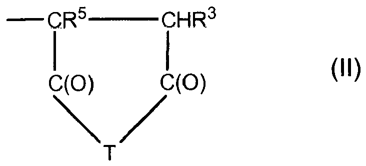 wherein, T is a group of formula -N-Y-X¹-P; and P is H.

13. A method according to claim 12, wherein no solvent is used.

14. A method according to claim 12, wherein the backbone and side chain precursors are dissolved in an organic solvent during the reaction.

15. A method according to any of claims 12-14 wherein an acid or base catalyst is added to the reaction mixture.

16. A method according to any of claims 12-15 wherein any acylating groups which have not reacted with side chain precursors are reacted with a sodium or potassium salt.

## Patentansprüche

1. Kaugummigrundmasse, umfassend ein amphiphiles Polymermaterial, das eine gerad- oder verzweigtkettige Kohlenstoff-Kohlenstoff-Hauptkette und eine Vielzahl von an die Hauptkette gebundenen Seitenketten umfasst, wobei die Seitenketten die Formel (I) aufweisen: 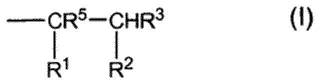
wobei R¹ und R² jeweils unabhängig für H, -C(O)WR⁴ oder -C(O)Q stehen, mit der Maßgabe, dass mindestens eine der Variablen R¹ und R² für die Gruppe -C(O)Q steht;
wobei W für O oder NR⁴ steht und Q für eine Gruppe der Formel -NR⁴-Y-X¹P steht;
oder R¹ und R² zusammen mit den Kohlenstoffatomen, an die sie gebunden sind, zusammen eine cyclische Struktur der Formel (II) bilden: 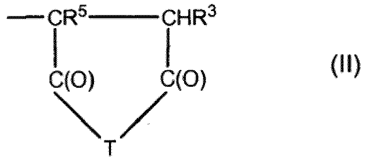
R³, R⁴ und R⁵ jeweils unabhängig für H oder C₁₋₆-Alkyl stehen;
T für eine Gruppe der Formel -N-Y-X¹-P steht;
wobei X¹ für O, S, (CH₂) oder NR⁴ steht oder fehlt;
wobei n für 1-6 steht;
P für H steht; und
Y für eine hydrophile polymere Gruppe, bei der es sich um ein Poly(alkylenoxid), ein Polyglycidol, einen Poly(vinylalkohol), ein Poly(styrolsulfonat) oder eine Poly(acrylsäure) handelt, steht.

2. Kaugummigrundmasse nach Anspruch 1, wobei es sich bei der hydrophilen polymeren Gruppe Y um ein Polyalkylenoxid handelt.

3. Kaugummigrundmasse nach Anspruch 2, wobei das Polyalkylenoxid die allgemeine Formel (ZO)_{b} aufweist, wobei Z für eine Alkylengruppe mit 2 bis 4 Kohlenstoffatomen steht und b für eine ganze Zahl im Bereich von 1 bis 125 steht.

4. Kaugummigrundmasse nach Anspruch 1, wobei es sich bei dem Polyalkylenoxid um ein Random-Copolymer, statistisches Copolymer, alternierendes Copolymer oder Blockcopolymer oder eine Kombination von zwei davon von zwei oder mehr Monomereinheiten ZO handelt, wobei Z jeweils unabhängig für eine Alkylengruppe mit 2 bis 4 Kohlenstoffatomen steht.

5. Kaugummigrundmasse nach einem der vorhergehenden Ansprüche, wobei sich die Hauptkette des Polymermaterials von einem Homopolymer eines ethylenisch ungesättigten Kohlenwasserstoff-Monomers oder von einem Copolymer von zwei oder mehr ethylenisch ungesättigten polymerisierbaren Kohlenwasserstoff-Monomeren ableitet und die Seitenketten hydrophil sind.

6. Kaugummigrundmasse nach Anspruch 5, wobei sich die Kohlenstoff-Kohlenstoff-Polymerhauptkette von einem Homopolymer eines ethylenisch ungesättigten polymerisierbaren Kohlenwasserstoff-Monomers mit 4 oder 5 Kohlenstoffatomen ableitet.

7. Kaugummigrundmasse nach Anspruch 6, wobei sich die Kohlenstoff-Kohlenstoff-Polymerhauptkette von einem Homopolymer von Isobutylen, Butadien oder Isopren ableitet.

8. Kaugummizusammensetzung, umfassend ein amphiphiles Polymermaterial, das eine gerad- oder verzweigtkettige Kohlenstoff-Kohlenstoff-Hauptkette und eine Vielzahl von an die Hauptkette gebundenen Seitenketten umfasst, wobei die Seitenketten die Formel (I) aufweisen: 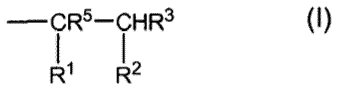
wobei R¹ und R² jeweils unabhängig für H, -C(O)WR⁴ oder -C(O)Q stehen, mit der Maßgabe, dass mindestens eine der Variablen R¹ und R² für die Gruppe -C(O)Q steht;
wobei W für O oder NR⁴ steht und Q für eine Gruppe der Formel -NR⁴-Y-X¹P steht;
oder R¹ und R² zusammen mit den Kohlenstoffatomen, an die sie gebunden sind, zusammen eine cyclische Struktur der Formel (II) bilden: 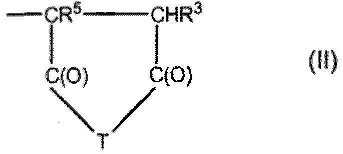
R³, R⁴ und R⁵ jeweils unabhängig für H oder C₁₋₆-Alkyl stehen;
T für eine Gruppe der Formel -N-Y-X¹-P steht; wobei X¹ für O, S, (CH₂) oder NR⁴ steht oder fehlt; wobei n für 1-6 steht;
P für H steht; und
Y für eine hydrophile polymere Gruppe, bei der es sich um ein Poly(alkylenoxid), ein Polyglycidol, einen Poly(vinylalkohol), ein Poly(styrolsulfonat) oder eine Poly(acrylsäure) handelt, steht;
und einen oder mehrere Süß- oder Geschmacksstoffe.

9. Kaugummizusammensetzung nach Anspruch 8, die eine Kaugummigrundmasse gemäß einem der Ansprüche 1-7 umfasst.

10. Kaugummizusammensetzung nach Anspruch 8 oder 9, die ferner ein Medikament umfasst.

11. Amphiphiles Polymermaterial gemäß einem der Ansprüche 1-7, wobei sich die Kohlenstoff-Kohlenstoff-Hauptkette von einem Homopolymer von Isopren ableitet und in der Formel (I) oder (II) X¹ für (CH₂)ₙ steht oder fehlt und P für H steht.

12. Verfahren zur Herstellung eines amphiphilen Polymermaterials nach Anspruch 11, bei dem man Hauptkettenvorläufer mit seitenständigen Einheiten der allgemeinen Formel (III) 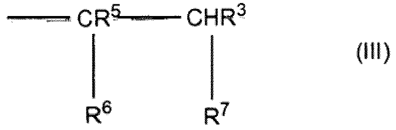
wobei R³ für H oder C₁₋₆-Alkyl steht, R⁵ für H oder C₁₋₆-Alkyl steht und R⁶ und R⁷ für H oder eine acylierende Gruppe stehen, mit der Maßgabe, dass mindestens eine der Variablen R⁶ und R⁷ für eine acylierende Gruppe steht, oder R⁶ und R⁷ zusammen mit den Kohlenstoffatomen, an die sie gebunden sind, zu einer Gruppe der Formel (IV) verknüpft sind: 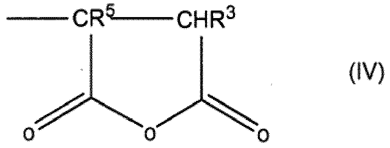 mit Seitenkettenvorläufern der allgemeinen Formel (V) in einer Reaktionsmischung umsetzt,
HR⁴N-Y-X¹H (V)
wobei X¹ für (CH₂) ₙ steht oder fehlt; wobei n für 1-6 steht;
und R⁴ für H oder C₁₋₆-Alkyl steht; und
Y für eine hydrophile polymere Gruppe, bei der es sich um ein Poly(alkylenoxid), ein Polygylcidol, einen Poly(vinylalkohol), ein Poly(styrolsulfonat) oder eine Poly(acrylsäure) handelt, steht;
wobei bei dem Verfahren die Amingruppe HR⁴N in der Verbindung der Formel (V) mit den Einheiten der allgemeinen Formel (III) bzw. (IV) zu dem amphiphilen Polymermaterial mit Seitenketten der allgemeinen Formel (I) 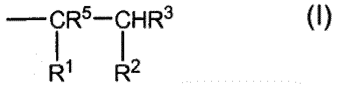
wobei R¹ für H, -C(O)WR⁴ oder -C(O)Q steht und R² für H, -C(O)WR⁴ oder -C(O)Q steht, mit der Maßgabe, dass mindestens eine der Variablen R¹ und R² für die Gruppe -C(O)Q steht;
wobei W für O oder NR⁴ steht und Q für eine Gruppe der Formel -NR⁴-Y-X¹P steht;
oder R¹ und R² zusammen mit den Kohlenstoffatomen, an die sie gebunden sind, zusammen eine cyclische Struktur der Formel (II) bilden: 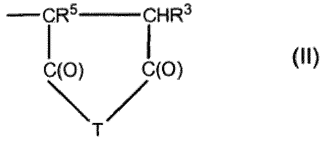 wobei T für eine Gruppe der Formel -N-Y-X¹-P steht und P für H steht; reagiert.

13. Verfahren nach Anspruch 12, bei dem man kein Lösungsmittel verwendet.

14. Verfahren nach Anspruch 12, bei dem man die Hauptketten- und Seitenkettenvorläufer bei der Umsetzung in einem organischen Lösungsmittel löst.

15. Verfahren nach einem der Ansprüche 12-14, bei dem man der Reaktionsmischung einen Säure- oder Basenkatalysator zusetzt.

16. Verfahren nach einem der Ansprüche 12-15, bei dem man jegliche acylierende Gruppen, die nicht mit Seitenkettenvorläufern reagiert haben, mit einem Natrium- oder Kaliumsalz umsetzt.

## Revendications

1. Base de chewing-gum comprenant un matériau polymère amphiphile qui comprend un squelette carbone-carbone à chaîne linéaire ou ramifiée et une multiplicité de chaînes latérales fixées au squelette, où les chaînes latérales répondent à la formule (I) 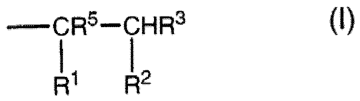
dans laquelle R¹ et R² sont chacun indépendamment H, -C(O)WR⁴ ou -C(O)Q, à condition qu'au moins l'un parmi R¹ et R² soit le groupement -C(O)Q ;
où W est O ou NR⁴ ; et Q est un groupement de formule -NR⁴-Y-X¹P ;
ou R¹ et R² forment ensemble une structure cyclique conjointement avec les atomes de carbone auxquels ils sont fixés, de formule (II) 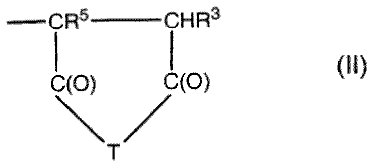
R³, R⁴ et R⁵ sont chacun indépendamment H ou C₁₋₆alkyle ; T est un groupement de formule -N-Y-X¹-P ;
où X¹ est O, S, (CH₂)ₙ, NR⁴ ou est absent ; où n vaut 1-6 ;
P est H ; et
Y est un groupement polymère hydrophile qui est un poly(oxyde d'alkylène), polyglycidol, poly(alcool vinylique), poly(sulfonate de styrène) ou poly(acide acrylique).

2. Base de chewing-gum selon la revendication 1, dans laquelle le groupement polymère hydrophile Y est un oxyde de polyalkylène.

3. Base de chewing-gum selon la revendication 2, dans laquelle l'oxyde de polyalkylène répond à la formule générale (ZO)_{b} dans laquelle Z est un groupement alkylène ayant de 2 à 4 atomes de carbone et b est un nombre entier dans la plage allant de 1 à 125.

4. Base de chewing-gum selon la revendication 1, dans laquelle l'oxyde de polyalkylène est un copolymère aléatoire, statistique, alterné ou bloc, ou une combinaison de deux parmi ceux-ci, de deux, ou plus, motifs monomères ZO, où chaque Z est indépendamment un groupement alkylène ayant de 2 à 4 atomes de carbone.

5. Base de chewing-gum selon l'une quelconque des revendications précédentes, dans laquelle le squelette dudit matériau polymère est dérivé d'un homopolymère d'un monomère hydrocarboné éthyléniquement insaturé ou d'un copolymère de deux, ou plus, monomères hydrocarbonés polymérisables éthyléniquement insaturés, et les chaînes latérales sont hydrophiles.

6. Base de chewing-gum selon la revendication 5, dans laquelle le squelette polymère carbone-carbone est dérivé d'un homopolymère d'un monomère hydrocarboné polymérisable éthyléniquement insaturé contenant 4 ou 5 atomes de carbone.

7. Base de chewing-gum selon la revendication 6, dans laquelle le squelette polymère carbone-carbone est dérivé d'un homopolymère d'isobutylène, de butadiène ou d'isoprène.

8. Composition de chewing-gum comprenant un matériau polymère amphiphile qui comprend un squelette carbone-carbone à chaîne linéaire ou ramifiée et une multiplicité de chaînes latérales fixées au squelette, où les chaînes latérales répondent à la formule (I) 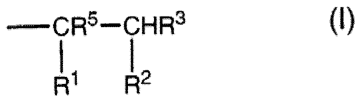
dans laquelle R¹ et R² sont chacun indépendamment H, -C(O)WR⁴ ou -C(O)Q, à condition qu'au moins l'un parmi R¹ et R² soit le groupement -C(O)Q ;
W est O ou NR⁴ ; et Q est un groupement de formule -NR⁴-Y-X¹P ;
ou R¹ et R² forment ensemble une structure cyclique conjointement avec les atomes de carbone auxquels ils sont fixés, de formule (II) 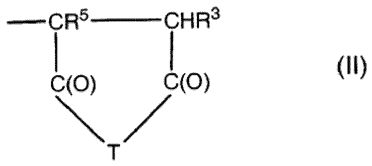
R³, R⁴ et R⁵ sont chacun indépendamment H ou C₁₋₆alkyle ; T est un groupement de formule -N-Y-X¹-P ;
où X¹ est O, S, (CH₂)ₙ, NR⁴ ou est absent ; où n vaut 1-6 ;
P est H ; et
Y est un groupement polymère hydrophile qui est un poly(oxyde d'alkylène), polyglycidol, poly(alcool vinylique), poly(sulfonate de styrène) ou poly(acide acrylique) ;
et un ou plusieurs agents édulcorants ou aromatisants.

9. Composition de chewing-gum selon la revendication 8, comprenant la base de chewing-gum telle que définie selon l'une quelconque des revendications 1-7.

10. Composition de chewing-gum selon la revendication 8 ou 9, comprenant en outre un médicament.

11. Matériau polymère amphiphile tel que défini selon l'une quelconque des revendications 1-7, dans lequel le squelette carbone-carbone est dérivé d'un homopolymère d'isoprène, et dans la formule (I) ou (II), X¹ est (CH₂)ₙ ou est absent ; et P est H.

12. Méthode de préparation d'un matériau polymère amphiphile selon la revendication 11, dans laquelle des précurseurs de squelette comprenant des motifs pendants de formule générale (III) 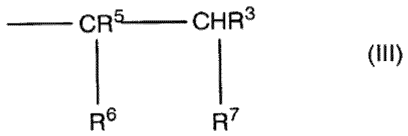 dans laquelle R³ est H ou C₁₋₆alkyle, R⁵ est H ou C₁₆alkyle, et R⁶ et R⁷ sont H ou un groupement d'acylation, à condition qu'au moins l'un parmi R⁶ et R⁷ soit un groupement d'acylation, ou R⁶ et R⁷ sont liés pour former, conjointement avec les atomes de carbone auxquels ils sont fixés, un groupement de formule (IV) : 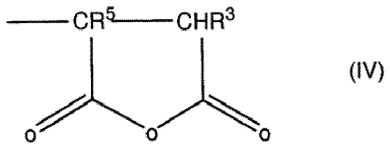 sont réagis avec des précurseurs de chaînes latérales de formule générale (V) dans un mélange réactionnel
HR⁴N-Y-X¹H (V)
dans laquelle X¹ est choisi parmi (CH₂)ₙ ou est absent ; où n vaut 1-6 ;
et R⁴ est H ou C₁₋₆alkyle ; et
Y est un groupement polymère hydrophile qui est un poly(oxyde d'alkylène), polyglycidol, poly(alcool vinylique), poly(sulfonate de styrène) ou poly(acide acrylique) ;
où dans la méthode, le groupement amine HR⁴N dans le composé de formule (V) réagit avec les motifs de formule générale (III) ou (IV) pour donner le matériau polymère amphiphile avec des chaînes latérales de formule générale (I) 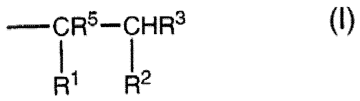
dans laquelle R¹ est H, -C(O)WR⁴ ou -C(O)Q ; et R² est H, -C(O)WR⁴ ou -C(O)Q ; à condition qu'au moins l'un parmi R¹ et R² soit le groupement -C(O)Q ;
où W est O ou NR⁴ ; et Q est un groupement de formule -NR⁴-Y-X¹P ;
ou R¹ et R² forment ensemble une structure cyclique conjointement avec les atomes de carbone auxquels ils sont fixés, de formule (II) 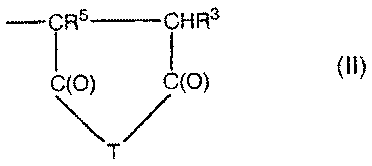 dans laquelle T est un groupement de formule -N-Y-X¹-P ; et P est H.

13. Méthode selon la revendication 12, dans laquelle aucun solvant n'est utilisé.

14. Méthode selon la revendication 12, dans laquelle les précurseurs de squelette et de chaînes latérales sont solubilisés dans un solvant organique pendant la réaction.

15. Méthode selon l'une quelconque des revendications 12-14, dans laquelle un catalyseur acide ou basique est ajouté au mélange réactionnel.

16. Méthode selon l'une quelconque des revendications 12-15, dans laquelle tout groupement d'acylation n'ayant pas réagi avec des précurseurs de chaînes latérales est réagi avec un sel de sodium ou de potassium.
